# EUROPÄISCHE PATENTSCHRIFT

(11) **EP 3 735 817 B1**
(45) Veröffentlichungstag und Bekanntmachung des Hinweises auf die Patenterteilung: **11.09.2024**
(21) Anmeldenummer: 20156505.8
(22) Anmeldetag: 11.02.2020
(51) Int. Cl.: A01D 75/28

(54) **MÄHDRESCHER-EINZUGSKANAL MIT ROLLENGELAGERTEM PENDELKOPPELRAHMEN SOWIE VERFAHREN ZUM PASSIVEN QUERAUSGLEICH**
COMBINE HARVESTER FEEDING CHANNEL WITH ROLLER MOUNTED PENDULUM COUPLING FRAME AND METHOD FOR PASSIVE TRANSVERSAL COMPENSATION
CANAL D'ALIMENTATION DE MOISSONNEUSE-BATTEUSE POURVU D'UN CHÂSSIS DE COUPLAGE PENDULAIRE MONTÉ SUR ROULEAUX AINSI QUE PROCÉDÉ DE COMPENSATION TRANSVERSALE PASSIVE

(30) Priorität: 06.05.2019 DE 102019111587
(43) Veröffentlichungstag der Anmeldung: 11.11.2020
(73) Patentinhaber: CLAAS Selbstfahrende Erntemaschinen GmbH, 33428 Harsewinkel (DE)
(72) Erfinder: Köhler, Mathieu, 33428 Harsewinkel (DE); Füchtling, Christian, 48317 Drenstein Rinkerode (DE); Herter, Felix, 33428 Harsewinkel (DE)
(74) Vertreter: CLAAS Gruppe

(56) Entgegenhaltungen:
- EP-A1- 1 145 619
- EP-A1- 2 832 206
- EP-B1- 1 145 619
- FR-A1- 2 781 117
- US-A- 2 780 903
- US-A- 2 904 949

## Beschreibung

Die Erfindung betrifft ein Erntefahrzeug mit einem Vorsatzgerät und einer Verschwingeinrichtung zur pendelnden Aufhängung des Vorsatzgeräts an dem Erntefahrzeug nach dem Oberbegriff des Anspruchs 1.

Aus DE 10 2006 030 508 B4 ist eine Verschwingeinrichtung zur pendelnden Aufhängung eines Vorsatzgeräts an einem Erntefahrzeug bekannt.

Die Verschwingeinrichtung besteht aus einem Tragrahmen, der am Erntefahrzeug befestigt werden kann und einem drehbar zum Tragrahmen gelagerten Pendelrahmen, der mit dem Vorsatzgerät verbunden ist. Die Aufhängung zwischen Tragrahmen und Pendelrahmen erfolgt mit einer Rolle, die um eine sich in Vorwärtsrichtung des Erntefahrzeugs erstreckende Achse drehbar ist sowie mit einem sich quer zur Vorwärtsrichtung erstreckendem Auflageelement, an dem die Rolle anliegt, wobei das Auflageelement derart geformt ist, dass das Vorsatzgerät durch die Schwerkraft in seine Grundstellung vorgespannt wird, wobei das Auflageelement einen konkaven Bereich aufweist, mit dem die Rolle zusammenwirkt, wenn sich das Vorsatzgerät in seiner Grundstellung befindet.

Weiterhin umfasst der Tragrahmen einen sich horizontal und quer zur Vorwärtsrichtung erstreckenden mittleren Abschnitt, der sich am Pendelrahmen abstützt.

Eine Pendelbewegung ist möglich, wenn auf das Vorsatzgerät einwirkende Kräfte die wirkende Schwerkraft übersteigen. Die konkave Form des Auflageelements führt zu einer größeren Abhängigkeit der schwerkraftbedingten Rückstellkraft.

In den Ausführungen wird die Verwendung von zwei Rollen und zwei Auflageelementen seitlich nebeneinander beschrieben, die näherungsweise konzentrisch zu einer virtuellen Pendelachse angeordnet sind. Die virtuelle Pendelachse befindet sich etwa in der Mitte des Einzugskanals des Erntefahrzeugs. Zusätzlich wird eine mögliche Anordnung von Federn zwischen Tragrahmen und Pendelrahmen erwähnt, die den Pendelrahmen in der Grundstellung vorspannen. Weiterhin ist ein anbringen von Hydraulikzylindern zwischen Tragrahmen und Pendelrahmen möglich, die für eine sensorbasierte Auflagedruck- oder Höhenregelung des Vorsatzgeräts dienen und in eine wirkungslose Schwimmstellung bringbar sind.

Beim Verschwenken des Vorsatzgeräts um die Pendelachse resultieren infolge der Vorspannung des Pendelrahmens in seiner Grundstellung und auf Grund der Reibung zwischen Pendelrahmen und Tragrahmen sehr hohe Momente zwischen dem Vorsatzgerät und dem Erntefahrzeug. Dementsprechend werden Bewegungsanregungen aufgrund von Bodenkonturen direkt von dem Erntefahrzeug auf den Vorsatz und umgekehrt übertragen.

Weiterhin führt die Verwendung von Hydraulikzylindern zwischen Tragrahmen und Pendelrahmen für eine sensorbasierte Auflagedruck- oder Höhenregelung des Vorsatzgeräts zu zusätzlich wirkenden Kräften zwischen Vorsatzgerät und Erntefahrzeug.

Dadurch entstehen hohe Belastungen an dem Erntefahrzeug und dem Vorsatz. Neben diesen führen die Bewegungsanregungen zu Ungenauigkeiten bei der Vorsatzschnitthöhenführung. Mit ansteigender Vorsatzschnittbreite verstärken sich die genannten Nachteile.

Ein weiterer Nachteil resultiert aus der konkaven Form des Auflageelements, da diese dazu führt, dass sich die virtuelle Pendelachse nicht exakt in der Mitte des Einzugskanals befindet. Eine Verschwingeinrichtung ist auch aus US 2 780 903 A bekannt.

Es ist deshalb Aufgabe der Erfindung, die beschriebenen Nachteile des Standes der Technik zu vermeiden, indem eine Verschwingeinrichtung zur Aufhängung eines pendelnden Vorsatzgeräts bereitgestellt wird, die eine deutliche Reduktion der übertragenen Momente zwischen Pendel- und Tragrahmen ermöglicht.

Diese Aufgabe wird erfindungsgemäß durch die kennzeichnenden Merkmale des Anspruchs 1 gelöst. Weitere vorteilhafte Ausgestaltungen sind den abhängigen Ansprüchen 2 bis 10, der Beschreibung und den Figurendarstellungen zu entnehmen.

Gemäß dem Anspruch 1 wird ein Erntefahrzeug mit einem Vorsatzgerät und einer Verschwingeinrichtung zur pendelnden Aufhängung des Vorsatzgeräts an dem Erntefahrzeug vorgeschlagen, mit zumindest zwei Tragrollen, die jeweils um eine sich in Vorwärtsrichtung des Erntefahrzeugs erstreckende Achse drehbar gelagert sind, mit einem sich quer zur Vorwärtsrichtung erstreckendem Auflageelement, an dem die Tragrollen anliegen. Weiterhin ist vorgesehen, dass das Auflageelement bogenförmig ausgebildet ist und die Tragrollen mit dem Auflageelement in Wirkverbindung stehen, wobei die Verschwingeinrichtung zumindest zwei weitere Stützrollen umfasst, die jeweils um eine sich in Querrichtung des Erntefahrzeugs erstreckende Achse drehbar gelagert sind und das Vorsatzgerät in Vorwärtsrichtung des Erntefahrzeugs in der Weise abstützt, sodass sich das Reibmoment zwischen dem Vorsatzgerät und dem Erntefahrzeug beim Pendeln des Vorsatzgeräts um eine sich in Fahrtrichtung erstreckende Achse verringert, wobei die Verschwingeinrichtung aus einer als Pendelrahmen ausgeführten vorsatzgerätseitigen Rahmenstruktur und einer als Kipprahmen ausgeführten erntefahrzeugseitigen Rahmenstruktur besteht, wobei zum aktiven Verschwenken des Vorsatzgeräts um die Pendelachse ein Schwenkzylinder zwischen den Pendelrahmen und den Kipprahmen befestigt ist, sodass der Schwenkzylinder den Pendelrahmen gegenüber dem Kipprahmen aktiv um die virtuelle Pendelachse verschwenken kann, wobei der Schwenkzylinder sich während des Arbeitsbetriebs in einer Schwimmstellung befindet, sodass das Vorsatzgerät freischwingend an dem Erntefahrzeug befestigt ist. Infolge der Verringerung des Reibmoments werden Bewegungsanregungen von dem Vorsatzgerät weniger ausgeprägt auf das Erntefahrzeug und umgekehrt übertragen sowie die notwendigen Verstellkräfte zur Ausrichtung des Vorsatzgeräts reduziert. Dies führt zu geringeren Belastungen des Vorsatzgeräts und des Erntefahrzeugs. Weiterhin wird durch die verringerten Bewegungsanregungen sowie der Reduktion der Verstellkräfte eine exaktere Ausrichtung des Vorsatzgeräts ermöglicht. Dieser Effekt wird durch die bogenförmige Ausbildung des Auflageelements verstärkt, indem diese eine Vorspannung des Vorsatzgeräts in einer bestimmten Position vermeidet.

Hierzu kann das Auflageelement der vorsatzgerätseitigen Rahmenstruktur zugeordnet sein, wobei die vorsatzgerätseitige Rahmenstruktur mit der erntefahrzeugseitigen Rahmenstruktur mittels der Trag- und Stützrollen gekoppelt ist und das Auflageelement konzentrisch zu einer virtuellen Pendelachse an der vorsatzgerätseitigen Rahmenstruktur angeordnet ist. Infolge der konzentrischen Anordnung des Auflageelements kann die vorsatzgerätseitige Rahmenstruktur und das damit verbundene Vorsatzgerät um die virtuelle Pendelachse eine harmonische Pendelbewegung durchführen.

Weiterhin ergibt sich durch eine Positionierung der virtuellen Pendelachse im Bereich des Gutflusses ein optimaler Gutfluss im Übergabebereich zwischen der vorsatzgerätseitigen und der erntefahrzeugseitigen Rahmenstruktur.

In einer vorteilhaften Ausgestaltung können die Tragrollen symmetrisch zur Längsmittelebene der erntefahrzeugseitigen Rahmenstruktur an der erntefahrzeugseitigen Rahmenstruktur angeordnet und dem Auflageelement in seinen Endbereichen zugeordnet sein, sodass ein Ungleichgewicht des Erntevorsatzes in einer horizontalen Ausrichtung vermieden wird. Des Weiteren bietet sich eine konzentrische Anordnung zur virtuellen Pendelachse an, um eine optimale Wirkverbindung mit dem Auflageelement zu erreichen. Selbstverständlich ist aber auch eine beschriebene Anordnung der Tragrollen an der vorsatzgerätseitigen Rahmenstruktur möglich, wobei das Auflageelement der erntefahrzeugseitigen Rahmenstruktur zugeordnet ist.

Weiterhin bietet es sich an, die Stützrollen ebenfalls konzentrisch zur virtuellen Pendelachse und vorzugsweise symmetrisch zur Längsmittelebene der erntefahrzeugseitigen Rahmenstruktur an der erntefahrzeugseitigen Rahmenstruktur anzuordnen, sodass diese bei einer Pendelbewegung des Vorsatzgeräts um die virtuelle Pendelachse die vorsatzgerätseitige Rahmenstruktur abstützen und entlang des Kontaktbereichs an der vorsatzgerätseitigen Rahmenstruktur abrollen. Selbstverständlich ist aber auch eine beschriebene Anordnung der Stützrollen an der vorsatzgerätseitigen Rahmenstruktur möglich, wobei diese entlang eines erntefahrzeugseitigen Kontaktbereichs abrollen.

In einer vorteilhaften Ausgestaltung können mindestens zwei Führungsrollen verwendet werden, die jeweils um eine sich in Vorwärtsrichtung erstreckende Achse drehbar an der vorsatzgerätseitigen Rahmenstruktur gelagert sind und jeweils mit einer sich in Vorwärtsrichtung erstreckenden äußeren Fläche der erntefahrzeugseitigen Rahmenstruktur in Wirkverbindung stehen, sodass bei einer Pendelbewegung des Vorsatzgeräts dieses zusätzliche um die virtuelle Pendelachse geführt wird. Selbstverständlich ist aber auch eine beschriebene Anordnung der Führungsrollen an der erntefahrzeugseitigen Rahmenstruktur möglich, wobei diese mit einer äquivalenten Fläche der vorsatzgerätseitigen Rahmenstruktur in Wirkverbindung stehen.

Weiterhin kann die jeweilige Fläche, mit welcher die jeweilige Führungsrolle in Wirkverbindung steht, konzentrisch zur virtuellen Pendelachse ausgebildet sein, um eine optimale Wirkverbindung sowie Führung des Vorsatzgeräts um die virtuelle Pendelachse zu erreichen. Weiterhin können hierzu die Führungsrollen symmetrisch zur Längsmittelebene der vorsatzgerätseitigen Rahmenstruktur und vorzugsweise konzentrisch zur virtuellen Pendelachse angeordnet sein.

Anzumerken ist, dass die erfindungsgemäße Verschwingeinrichtung zur Aufhängung des Erntevorsatzes komplett am Vorsatzgerät angeordnet sein kann und dementsprechend gemeinsam mit dem Vorsatzgerät von dem Erntefahrzeug abnehmbar ist. Eine Befestigung der Verschwingeinrichtung am Erntefahrzeug ist ebenfalls möglich, sodass diese am Erntefahrzeug verbleibt, wenn das Vorsatzgerät abgenommen wird. Auch eine Mischform ist möglich, bei der die Rollen oder das Auflageelement in Abhängigkeit von der Gestaltung der Verschwingeinrichtung jeweils an der vorsatzgerätseitigen oder der erntefahrzeugseitigen Rahmenstruktur verbleiben.

In einer vorteilhaften Ausgestaltung können die Tragrollen sowie die an denselben geführten Auflageelemente sich in einem oberen Bereich der Verschwingeinrichtung befinden und sich die Führungs- sowie Stützrollen in einem unteren seitlichen Bereich der Verschwingeinrichtung befinden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
Figur 1 zeigt schematisch eine Seitenansicht des vorderen Aufbaus eines Erntefahrzeugs mit einem Vorsatzgerät,
Figur 2 zeigt eine Stirnansicht des Erntefahrzeugs,
Figur 3 zeigt eine Ansicht des Pendelrahmens und Kipprahmens von vorn,
Figur 4 zeigt einen seitlichen Ausschnitt des Pendelrahmens und Tragrahmens mit einer Führungsrolle und einer Stützrolle,

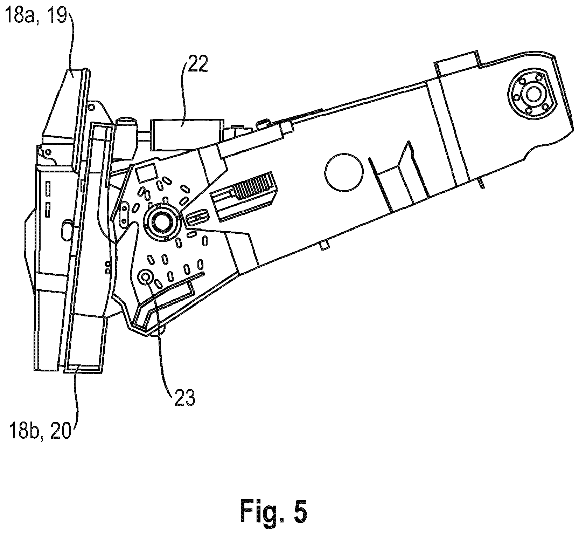

Figur 5 zeigt eine seitliche Ansicht des Pendelrahmens und Tragrahmens mit dem Einzugskanal.

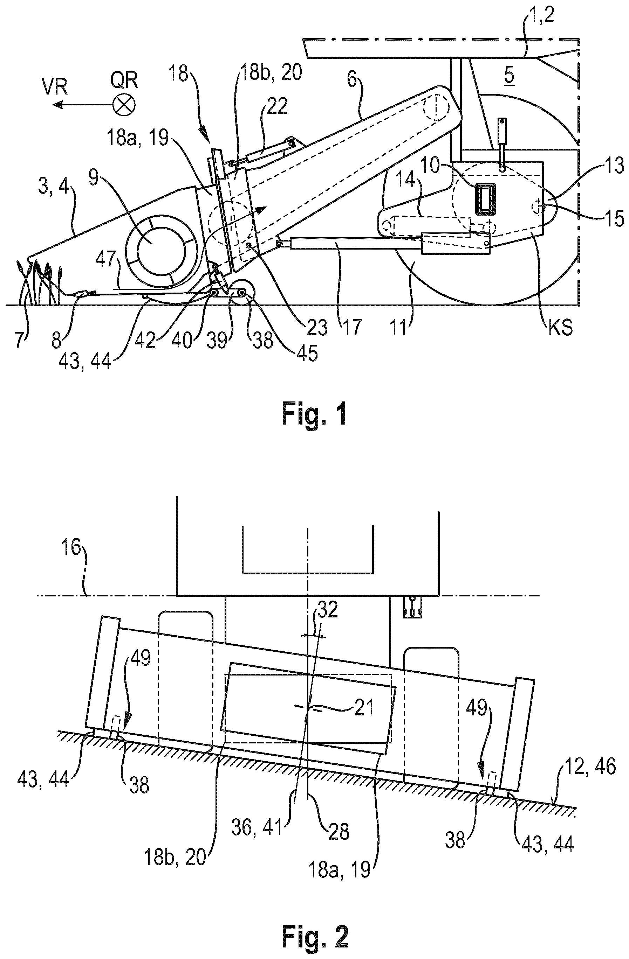

Fig. 1 zeigt den prinzipiellen vorderen Aufbau eines als Mähdrescher 2 ausgeführten Erntefahrzeugs 1 mit einem Vorsatzgerät 3, welches im dargestellten Ausführungsbeispiel als Getreideschneidwerk 4 ausgeführt ist. Dieses ist an dem nicht weiter erläuterten Maschinengehäuse 5 in noch näher zu erläuternder Weise aufgehängt. An dem Maschinengehäuse 5 ist der Schrägförderer 6 quer zur Vorwärtsrichtung VR des Erntefahrzeugs 1 drehbar gelagert. Der Schrägförderer 6 fördert das Erntegut 7 zum nicht dargestellten Dreschwerk. Am Vorsatzgerät 3 befindet sich ein Mähbalken 8 und ein Querförderer 9, die dazu dienen das Erntegut 7 vor die einlaufseitige Öffnung des Schrägförderers 6 zu transportieren. Mit dem Maschinengehäuse 5 ist die Hauptfahrachse 10 des Erntefahrzeugs 1 starr verbunden. Die Laufräder 11 sind an der Hauptfahrachse 10 höhenverstellbar gelagert, so dass eine horizontale Ausrichtung der im Maschinengehäuse 5 gelagerten Aggregate für die Ernte am Hang 12 möglich ist. Dazu ist das Erntefahrzeug 1 mit zwei Radgetrieben 13 ausgestattet, welche über Konsolen KS mit den Enden der Hauptfahrachse 10 schwenkbar verbunden sind. An den Konsolen KS stützen sich Kolbenzylindereinheiten 14 ab, deren Kolbenstangen an den Radgetrieben 13 angreifen, die ihrerseits um feste Achsen 15 in den Konsolen verschwenkbar sind. Die Verstellung der Laufräder 11 erfolgt selbsttätig und wird nicht näher erläutert.

Fig. 2 zeigt schematisch eine Stirnansicht des Mähdreschers 2 am Hang 12. Fährt der Mähdrescher 2 in eine Schräglage, werden die Kolbenzylindereinheiten 14 angesteuert, um das Maschinengehäuse 5 durch Verschwenken der Laufräder 11 in der waagerechten Ausgangslage 16 zu halten. Das Vorsatzgerät 3 und der Schrägförderer 6 werden durch die Kolbenzylindereinheiten 17, welche auf der einen Seite am Schrägförderer 6 und auf der anderen Seite im Bereich der Hauptfahrachse 10 befestigt sind, angehoben bzw. abgesenkt.

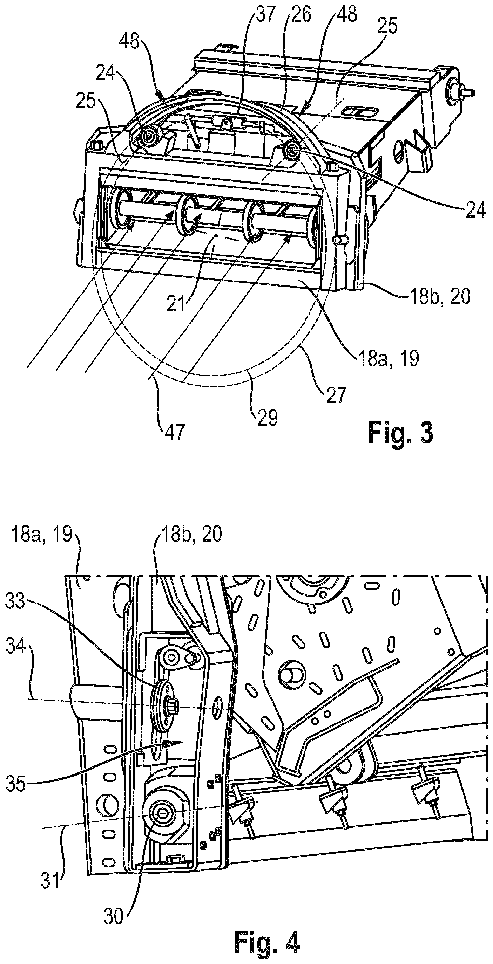

Die Ankopplung des Vorsatzgeräts 3 erfolgt über eine Verschwingeinrichtung 18. Die Verschwingeinrichtung 18 besteht aus einer als Pendelrahmen 18a ausgeführten vorsatzgerätseitigen Rahmenstruktur 19 und einer als Kipprahmen 18b ausgeführten erntefahrzeugseitigen Rahmenstruktur 20, die Fig. 3 in einer Frontansicht darstellt.

Der Pendelrahmen 18a ist gegenüber dem Kipprahmen 18b um eine virtuelle, sich etwa in Vorwärtsrichtung VR erstreckende virtuelle Pendelachse 21 verschwenkbar gelagert und erlaubt es dem Vorsatzgerät 3 gegenüber dem Schrägförderer 6 um die virtuelle Pendelachse 21 zu pendeln.

Der Kipprahmen 18b ist am Schrägförderer 6 mit einer Kolbenzylindereinheit 22 schwenkbar um eine untere Querachse 23 gelagert, so dass der Schnittwinkel des Vorsatzgeräts 3 in Maschinenlängsrichtung verstellbar ist.

Der Kipprahmen 18b haltert im oberen Bereich zwei Tragrollen 24, die um ihre sich parallel zur Richtung der virtuellen Pendelachse 21 erstreckenden Achsen 25 drehbar sind. Auf den Tragrollen 24 liegt ein Auflageelement 26 an, welches sich entlang einer Kreisbahn 27 erstreckt, welche wiederum konzentrischen zur virtuellen Pendelachse 21 angeordnet ist und mit dem Pendelrahmen 18a verbunden ist. Die beschriebene Anordnung der Tragrollen 24 ermöglicht es dem Pendelrahmen 18a um die virtuelle Pendelachse 21 zu pendeln. In dem dargestellten Ausführungsbeispiel sind zwei Tragrollen 24 am Kipprahmen 18b symmetrisch zur Längsmittelebene 28 des Kipprahmens 18b auf einer sich konzentrisch zur virtuellen Pendelachse 21 erstreckenden Kreisbahn 29 gelagert.

Fig. 4 zeigt eine Stützrolle 30, die seitlich im unteren Bereich des Kipprahmens 18b gelagert ist und um ihre sich quer zur Richtung der virtuellen Pendelachse 21 erstreckende Achse 31 drehbar ist. Die Stützrolle 30 liegt am Pendelrahmen 18a an und stützt diesen bei einer Pendelbewegung 32 in Vorwärtsrichtung VR des Erntefahrzeugs 1 ab, so dass ein direkter Kontakt des Pendelrahmens 18a mit dem Kipprahmen 18b vermieden wird und das resultierende Reibmoment zwischen dem Pendelrahmen 18a und dem Kipprahmen 18b gering ist. In dem dargestellten Ausführungsbeispiel sind zwei Stützrollen 30 am Kipprahmen 18b symmetrisch zur Längsmittelebene 28 des Kipprahmens 18b auf einer sich konzentrisch zur virtuellen Pendelachse 21 erstreckenden Kreisbahn gelagert.

Fig. 4 zeigt weiterhin eine Führungsrolle 33, die seitlich im unteren Bereich des Pendelrahmens 18a um ihre sich parallel zur Richtung der virtuellen Pendelachse 21 erstreckende Achse 34 drehbar gelagert ist. Die Führungsrolle 33 steht mit einer sich in Vorwärtsrichtung VR erstreckenden äußeren Fläche 35 des Kipprahmens 18b in Wirkverbindung, so dass bei einer Pendelbewegung 32 der Pendelrahmen 18a um die virtuelle Pendelachse 21 geführt wird. In dem dargestellten Ausführungsbeispiel sind zwei Führungsrollen 33 am Pendelrahmen 18a symmetrisch zur Längsmittelebene 36 des Pendelrahmens 18a auf einer sich konzentrisch zur virtuellen Pendelachse 21 erstreckenden Kreisbahn gelagert.

Zum aktiven Verschwenken des Vorsatzgeräts 3 um die Pendelachse 21 ist ein Schwenkzylinder 37 zwischen den Pendelrahmen 18a und den Kipprahmen 18b befestigt, sodass der Schwenkzylinder 37 den Pendelrahmen 18a gegenüber den Kipprahmen 18b aktiv um die virtuelle Pendelachse 21 verschwenken kann. Dieser befindet sich während des Arbeitsbetriebs in Schwimmstellung, sodass das Vorsatzgerät 3 freischwingend an dem Erntefahrzeug 1 befestigt ist.

Der Querausgleich, welcher das Verschwenken des Vorsatzgeräts 3 um die virtuelle Pendelachse 21 zur Anpassung der Position des Vorsatzgeräts 3 an Bodenkonturen beschreibt, erfolgt während des Arbeitsbetriebs durch zwei höhenverstellbare Stützräder 38. Hierfür sind im Ausführungsbeispiel zwei Halterungen 39 um eine sich quer zur Vorwärtsrichtung VR erstreckende Achse 40 schwenkbar am Vorsatzgerät 3 befestigt. Die Halterungen 39 sind im äußeren Bereich des Vorsatzgeräts 3 befestigt und symmetrisch zur Längsmittelebene 41 des Vorsatzgeräts 3 angeordnet, welche im Ausführungsbeispiel der Längsmittelebene 36 des Pendelrahmens 18a entspricht. Mittels eines Hydraulikzylinders 42, der an dem Vorsatzgerät 3 und der Halterung 39 befestigt ist, wird die Halterung 39 verschwenkt. Angesteuert werden die Hydraulikzylinder 42 im Ausführungsbeispiel mittels Sensoren 43, mit denen der Bodenabstand des Vorsatzgeräts 3 in an sich bekannter Weise laufend gemessen wird. Bei den Sensoren 43 handelt es sich im Ausführungsbeispiel um schwenkbewegliche Bodentaster 44. An der Halterung 39 sind die Stützräder 38 drehbar um eine sich quer zur Vorwärtsrichtung VR erstreckende Achse 45 im äußeren Bereich des Vorsatzgeräts 3 befestigt. Die Stützräder 38 werden während des Arbeitsbetriebs über den Boden 46 geführt und anhand des Sensorsignals der Bodentaster 44 so ausgerichtet, dass die Position des Vorsatzgeräts 3 an vorhandene Bodenkonturen angepasst wird.

Während des Vorgewendes oder einer Straßenfahrt wird das Vorsatzgerät 3 in der Regel mittels der Kolbenzylindereinheit 17 angehoben, sodass kein Kontakt der Stützräder 38 mit dem Boden 46 besteht. Der Schwenkzylinder 37 ist in diesem Zustand gesperrt, damit eine Pendelbewegung 32 des Vorsatzgeräts 3 vermieden wird.

### Bezugszeichenliste:

| | | | |
|---|---|---|---|
| 1 | Erntefahrzeug | 29 | Konzentrische Kreisbahn Tragrollen |
| 2 | Mähdrescher | 30 | Stützrollen |
| 3 | Vorsatzgerät | 31 | Achse Stützrolle |
| 4 | Getreideschneidwerk | 32 | Pendelbewegung |
| 5 | Maschinengehäuse | 33 | Führungsrollen |
| 6 | Schrägförderer | 34 | Achse Führungsrolle |
| 7 | Erntegut | 35 | Fläche |
| 8 | Mähbalken | 36 | Längsmittelebene Pendelrahmen |
| 9 | Querförderer | 37 | Schwenkzylinder |
| 10 | Hauptfahrachse | 38 | Stützräder |
| 11 | Laufräder | 39 | Halterung Stützrad |
| 12 | Hang | 40 | Achse Halterung |
| 13 | Radgetrieben | 41 | Längsmittelebene Erntevorsatz |
| 14 | Kolbenzylindereinheiten | 42 | Hydraulikzylinder |
| 15 | Achsen | 43 | Sensoren |
| 16 | Waagerechte Ausgangslage | 44 | Bodentaster |
| 17 | Kolbenzylindereinheiten | 45 | Achse Stützrad |
| 18 | Verschwingeinrichtung | 46 | Boden |
| 18a | Pendelrahmen | 47 | Gutfluss |
| 18b | Kipprahmen | 48 | Endbereich Auflageelement |
| 19 | Vorsatzgerätseitige Rahmenstruktur | 49 | Äußerer Bereich Vorsatzgerät |
| 20 | Erntefahrzeugseitige Rahmenstruktur | 50 | |
| 21 | Virtuelle Pendelachse | 51 | |
| 22 | Kolbenzylindereinheit | 52 | |
| 23 | Querachse | 53 | |
| 24 | Tragrollen | 54 | |
| 25 | Achse Tragrolle | KS | Konsolen |
| 26 | Auflageelement | VR | Vorwärtsrichtung |
| 27 | Konzentrische Kreisbahn Auflageelement | QR | Querrichtung |
| 28 | Längsmittelebene Kipprahmen | | |

## Patentansprüche

1. Erntefahrzeug (1) mit einem Vorsatzgerät (3) und einer Verschwingeinrichtung (18) zur pendelnden Aufhängung des Vorsatzgeräts (3) an dem Erntefahrzeug (1), mit zumindest zwei Tragrollen (24), die jeweils um eine sich in Vorwärtsrichtung (VR) des Erntefahrzeugs (1) erstreckende Achse (25) drehbar gelagert sind, mit einem sich quer zur Vorwärtsrichtung (VR) erstreckendem Auflageelement (26), an dem die Tragrollen (24) anliegen,
wobei das Auflageelement (26) bogenförmig ausgebildet ist und die Tragrollen (24) mit dem Auflageelement (26) in Wirkverbindung stehen, wobei die Verschwingeinrichtung (18) zumindest zwei weitere Stützrollen (30) umfasst, die jeweils um eine sich in Querrichtung (QR) des Erntefahrzeugs (1) erstreckende Achse (31) drehbar gelagert sind und das Vorsatzgerät (3) in Vorwärtsrichtung (VR) des Erntefahrzeugs (1) in der Weise abstützt, sodass sich das Reibmoment zwischen dem Vorsatzgerät (3) und dem Erntefahrzeug (1) verringert,
**dadurch gekennzeichnet, dass** die Verschwingeinrichtung (18) aus einer als Pendelrahmen (18a) ausgeführten vorsatzgerätseitigen Rahmenstruktur (19) und einer als Kipprahmen (18b) ausgeführten erntefahrzeugseitigen Rahmenstruktur (20) besteht, wobei zum aktiven Verschwenken des Vorsatzgeräts (3) um die Pendelachse (21) ein Schwenkzylinder (37) zwischen den Pendelrahmen (18a) und den Kipprahmen (18b) befestigt ist, sodass der Schwenkzylinder (37) den Pendelrahmen (18a) gegenüber dem Kipprahmen (18b) aktiv um die virtuelle Pendelachse (21) verschwenken kann, wobei der Schwenkzylinder (37) sich während des Arbeitsbetriebs in einer Schwimmstellung befindet, sodass das Vorsatzgerät (3) freischwingend an dem Erntefahrzeug (1) befestigt ist.

2. Erntefahrzeug (1) nach Anspruch 1, **dadurch gekennzeichnet, dass** das Auflageelement (26) der vorsatzgerätseitigen Rahmenstruktur (19) zugeordnet ist, wobei die vorsatzgerätseitige Rahmenstruktur (19) mit der erntefahrzeugseitigen Rahmenstruktur (20) gekoppelt ist und das Auflageelement (26) konzentrisch zu einer virtuellen Pendelachse (21) an der vorsatzgerätseitigen Rahmenstruktur (19) angeordnet ist.

3. Erntefahrzeug (1) nach einem der Ansprüche 1 bis 2, **dadurch gekennzeichnet, dass** sich die virtuelle Pendelachse (21) im Bereich des Gutflusses (47) befindet.

4. Erntefahrzeug (1) nach einem der Ansprüche 1 bis 3, **dadurch gekennzeichnet, dass** die Tragrollen (24) symmetrisch zur Längsmittelebene (28) der erntefahrzeugseitigen Rahmenstruktur (20) und vorzugsweise konzentrisch zur virtuellen Pendelachse (21) an der erntefahrzeugseitigen Rahmenstruktur (20) angeordnet sind, wobei die Tragrollen (24) dem Auflageelement (26) in seinen Endbereichen (48) zugeordnet sind.

5. Erntefahrzeug (1) nach einem der Ansprüche 1 bis 4, **dadurch gekennzeichnet, dass** die Stützrollen (30) konzentrisch zur virtuellen Pendelachse (21) und vorzugsweise symmetrisch zur Längsmittelebene (28) der erntefahrzeugseitigen Rahmenstruktur (20) an der erntefahrzeugseitigen Rahmenstruktur (20) angeordnet sind.

6. Erntefahrzeug (1) nach einem der Ansprüche 1 bis 5, **dadurch gekennzeichnet, dass** zusätzlich mindestens zwei Führungsrollen (33) verwendet werden, die jeweils um eine sich in Vorwärtsrichtung (VR) erstreckende Achse (34) drehbar an der vorsatzgerätseitigen Rahmenstruktur (19) gelagert sind und jeweils mit einer sich in Vorwärtsrichtung (VR) erstreckenden äußeren Fläche (35) der erntefahrzeugseitigen Rahmenstruktur (20) in Wirkverbindung stehen.

7. Erntefahrzeug (1) nach Anspruch 6, **dadurch gekennzeichnet, dass** die jeweilige Fläche (35), mit welcher die jeweilige Führungsrolle (33) in Wirkverbindung steht, konzentrisch zur virtuellen Pendelachse (21) ist.

8. Erntefahrzeug (1) nach einem der Ansprüche 6 bis 7, **dadurch gekennzeichnet, dass** die Führungsrollen (33) symmetrisch zur Längsmittelebene (36) der vorsatzgerätseitigen Rahmenstruktur (19) und vorzugsweise konzentrisch zur virtuellen Pendelachse (21) angeordnet sind.

9. Erntefahrzeug (1) nach einem der Ansprüche 1 bis 8, **dadurch gekennzeichnet, dass** die Verschwingeinrichtung (18) gemeinsam mit dem Vorsatzgerät (3) von dem Erntefahrzeug (1) abnehmbar ist.

10. Erntefahrzeug (1) nach einem der Ansprüche 1 bis 8, **dadurch gekennzeichnet, dass** die Tragrollen (24) sowie die an denselben geführten Auflageelemente (26) sich in einem oberen Bereich der Verschwingeinrichtung (18) befinden und sich die Führungs- (33) und Stützrollen (30) in einem unteren seitlichen Bereich der Verschwingeinrichtung (18) befinden.

## Claims

1. A harvesting vehicle (1) with a front attachment (3) and a swinger device (18) for the floating suspension of the front attachment (3) on the harvesting vehicle (1), with at least two load bearing rollers (24) which are respectively rotatably mounted about an axis (25) extending in the forward direction (VR) of the harvesting vehicle (1), with a bearing element (26) extending transversely to the forward direction (VR), on which the load bearing rollers (24) are seated,
wherein the bearing element (26) is arcuate in configuration and the load bearing rollers (24) are in operative connection with the bearing element (26), wherein the swinger device (18) comprises at least two further support rollers (30) which are respectively rotatably mounted about an axis (31) extending in the transverse direction (QR) of the harvesting vehicle (1) and support the front attachment (3) in the forward direction (VR) of the harvesting vehicle (1) in a manner such that the frictional torque between the front attachment (3) and the harvesting vehicle (1) is reduced,
**characterized in that**
the swinger device (18) consists of a frame structure (19) on the front attachment side configured as a floating frame (18a) and a frame structure (20) on the harvesting vehicle side configured as a tilting frame (18b), wherein, in order to actively swing the front attachment (3) about the floating axis (21), a swivel cylinder (37) is attached between the floating frame (18a) and the tilting frame (18b), so that the swivel cylinder (37) can actively swing the floating frame (18a) with respect to the tilting frame (18b) about the virtual floating axis (21), wherein, during the working operation, the swivel cylinder (37) is located in a floating position, so that the front attachment (3) is mounted to swing freely on the harvesting vehicle (1).

2. The harvesting vehicle (1) according to claim 1, **characterized in that** the bearing element (26) is associated with the frame structure (19) on the front attachment side, wherein the frame structure (19) on the front attachment side is coupled to the frame structure (20) on the harvesting vehicle side and the bearing element (26) is disposed concentrically with a virtual floating axis (21) on the frame structure (19) on the front attachment side.

3. The harvesting vehicle (1) according to one of claims 1 to 2, **characterized in that** the virtual floating axis (21) is located in the region of the flow of material (47).

4. The harvesting vehicle (1) according to one of claims 1 to 3, **characterized in that** the load bearing rollers (24) are disposed symmetrically with respect to the longitudinal median plane (28) of the frame structure (20) on the harvesting vehicle side and preferably concentrically with respect to the virtual floating axis (21) on the frame structure (20) on the harvesting vehicle side, wherein the load bearing rollers (24) are associated with the bearing element (26) in its end regions (48).

5. The harvesting vehicle (1) according to one of claims 1 to 4, **characterized in that** the support rollers (30) are disposed on the frame structure (20) on the harvesting vehicle side concentrically with respect to the virtual floating axis (21) and preferably symmetrically with respect to the longitudinal median plane (28) of the frame structure (20) on the harvesting vehicle side.

6. The harvesting vehicle (1) according to one of claims 1 to 5, **characterized in that** in addition, at least two guide rollers (33) are used which are respectively rotatably mounted on the frame structure (19) on the front attachment side about an axis (34) extending in the forward direction (VR) and are respectively operatively connected to an outer face (35) of the frame structure (20) on the harvesting vehicle side which extends in the forward direction (VR).

7. The harvesting vehicle (1) according to claim 6, **characterized in that** the respective face (35) with which the respective guide roller (33) is in operative connection is concentric with respect to the virtual floating axis (21).

8. The harvesting vehicle (1) according to one of claims 6 to 7, **characterized in that** the guide rollers (33) are disposed symmetrically with respect to the longitudinal median plane (36) of the frame structure (19) on the front attachment side and preferably concentrically with respect to the virtual floating axis (21).

9. The harvesting vehicle (1) according to one of claims 1 to 8, **characterized in that** the swinger device (18) along with the front attachment (3) can be removed from the harvesting vehicle (1).

10. The harvesting vehicle (1) according to one of claims 1 to 8, **characterized in that** the load bearing rollers (24) as well as the bearing elements (26) guided thereon are located in an upper region of the swinger device (18) and the guide rollers (33) and support rollers (30) are located in a lower lateral region of the swinger device (18).

## Revendications

1. Véhicule de récolte (1) comprenant un outil frontal (3) et un dispositif de basculement (18) pour la suspension pendulaire de l'outil frontal (3) sur le véhicule de récolte (1), comportant au moins deux rouleaux de support (24) qui sont chacun montés tournants autour d'un axe (25) s'étendant dans le sens d'avancement (VR) du véhicule de récolte (1), comportant un élément d'appui (26) qui s'étend transversalement au sens d'avancement (VR) et sur lequel sont en appui les rouleaux de support (24),
l'élément d'appui (26) étant réalisé en forme d'arc, et les rouleaux de support (24) étant en liaison fonctionnelle avec l'élément d'appui (26), le dispositif de basculement (18) comportant au moins deux autres rouleaux de soutien (30) qui sont chacun montés tournants autour d'un axe (31), s'étendant dans la direction transversale (QR) du véhicule de récolte (1), et soutiennent l'outil frontal (3) dans le sens d'avancement (VR) du véhicule de récolte (1), de manière à ce que le couple de frottement entre l'outil frontal (3) et le véhicule de récolte (1) diminue.
**caractérisé en ce que**
le dispositif de basculement (18) est constitué d'une structure de cadre (19) côté outil frontal, réalisée comme cadre pendulaire (18a), et d'une structure de cadre (20) côté véhicule de récolte, réalisée comme cadre basculant (18b), sachant que pour le pivotement actif de l'outil frontal (3) autour de l'axe pendulaire (21), un vérin de pivotement (37) est fixé entre le cadre pendulaire (18a) et le cadre basculant (18b), de sorte que le vérin de pivotement (37) peut faire pivoter le cadre pendulaire (18a) activement autour de l'axe pendulaire virtuel (21) par rapport au cadre basculant (18), le vérin de pivotement (37) se trouvant dans une position flottante pendant le service de travail, de sorte que l'outil frontal (3) est fixé de manière librement oscillante au véhicule de récolte (1).

2. Véhicule de récolte (1) selon la revendication 1, **caractérisé en ce que** l'élément d'appui (26) est associé à la structure de cadre (19) côté outil frontal, la structure de cadre (19) côté outil frontal étant accouplée à la structure de cadre (20) côté véhicule de récolte, et'élément d'appui (26) étant disposé de manière concentrique à un axe pendulaire virtuel (21) sur la structure de cadre (19) côté outil frontal.

3. Véhicule de récolte (1) selon une des revendications 1 à 2, **caractérisé en ce que** l'axe pendulaire virtuel (21) se trouve dans la région du flux de matières (47).

4. Véhicule de récolte (1) selon une des revendications 1 à 3, **caractérisé en ce que** les rouleaux de support (24) sont disposés sur la structure de cadre (20) côté véhicule de récolte, de manière symétrique par rapport au plan médian longitudinal (28) de la structure de cadre (20) côté véhicule de récolte et de préférence de manière concentrique à l'axe pendulaire virtuel (21), les rouleaux de support (24) étant associés à l'élément d'appui (26), dans les zones d'extrémité (48) de celui-ci.

5. Véhicule de récolte (1) selon une des revendications 1 à 4, **caractérisé en ce que** les rouleaux de soutien (30) sont disposés sur la structure de cadre (20) côté véhicule de récolte de manière concentrique à l'axe pendulaire virtuel (21) et de préférence de manière symétrique par rapport au plan médian longitudinal (28) de la structure de cadre (20) côté véhicule de récolte.

6. Véhicule de récolte (1) selon une des revendications 1 à 5, **caractérisé en ce que** l'on utilise en outre au moins deux rouleaux de guidage (33) qui sont chacun montés sur la structure de cadre (19) côté outil frontal, avec possibilité de rotation autour d'un axe (34) s'étendant dans le sens d'avancement (VR), et sont chacun en liaison fonctionnelle avec une surface extérieure (35) de la structure de cadre (20) côté véhicule de récolte, qui s'étend dans le sens d'avancement (VR).

7. Véhicule de récolte (1) selon la revendication 6, **caractérisé en ce que** la surface (35) respective, avec laquelle le rouleau de guidage (33) respectif est en liaison fonctionnelle, est concentrique à l'axe pendulaire virtuel (21).

8. Véhicule de récolte (1) selon une des revendications 6 à 7, **caractérisé en ce que** les rouleaux de guidage (33) sont disposés de manière symétrique par rapport au plan médian longitudinal (36) de la structure de cadre (20) côté véhicule de récolte et de préférence de manière concentrique à l'axe pendulaire virtuel (21).

9. Véhicule de récolte (1) selon une des revendications 1 à 8, **caractérisé en ce que** le dispositif de basculement (18) peut être retiré du véhicule de récolte (1) en même temps que l'outil frontal (3).

10. Véhicule de récolte (1) selon une des revendications 1 à 8, **caractérisé en ce que** les rouleaux de support (24) ainsi que les éléments d'appui (26) guidés sur ceux-ci se situent dans une région supérieure du dispositif de basculement (18), et les rouleaux de guidage (33) et les rouleaux de soutien (30) se situent dans une région latérale inférieure du dispositif de basculement (18).
